# EUROPÄISCHE PATENTANMELDUNG

(11) **EP 1 909 011 A2**
(43) Veröffentlichungstag der Anmeldung: **09.04.2008**
(21) Anmeldenummer: 07019020.2
(22) Anmeldetag: 27.09.2007
(51) Int. Cl.: F16L 3/12, F16L 55/035

(54) **Rohrschelle**

(30) Priorität: 02.10.2006 DE 102006047081
(71) Anmelder: Secura Services AG, 8401 Winterthur (CH)
(72) Erfinder: Müller, Harald, 65719 Hofheim-Wallau (DE); Ates, Hamparson, 68723 Schwetzingen (DE)
(74) Vertreter: Jochem, Bernd

(57) **Zusammenfassung**

Die Rohrschelle hat einen äußeren Ring (10) aus Metall oder Kunststoff mit wenigstens einer verschließbaren Öffnung und einer an diesem befestigten Einlage (14) aus einem schalldämmenden oder isolierenden Material. Um Schwierigkeiten, die insbesondere aus dem Anpressen der Einlage (14) gegen ein in der Rohrschelle gehaltenes Rohr sowie Relativbewegungen zwischen Rohr und Rohrschelle resultieren, zu vermeiden, ist vorgesehen, dass radial innerhalb der Einlage (14) ein mit dieser verbundener Ring (12) aus Metall, Kunststoff oder Sinterwerkstoff mit einer Öffnung vorhanden ist, die sich im wesentlichen an derselben Stelle des Umfangs wie die verschließbare Öffnung im äußeren Ring (10) befindet.

## Beschreibung

Die Erfindung betrifft eine Rohrschelle mit einem Ring aus Metall oder Kunststoff mit wenigstens einer verschließbaren Öffnung und einer an diesem befestigten Einlage aus einem schalldämmenden und/oder wärmedämmenden und/oder elektrisch isolierenden Material. Derartige Rohrschellen werden verwendet, wenn sie mittels der Einlage eine Schalldämmfunktion erfüllen, die Übertragung von Vibrationen und Wärme verhindern und ein in der Rohrschelle gehaltenes Bauteil gegenüber der Tragkonstruktion elektrisch isolieren sollen. In den meisten Fällen besteht die Einlage aus einem elastomeren Material, das sowohl Schall als auch Vibrationen dämmt. Mit geschäumten Kunststoffen lassen sich thermisch isolierende Einlagen herstellen und mittels geeigneter Kunstharze auch elektrisch isolierende Einlagen.

Im Laufe der Zeit sind die Anforderungen an den Schall- und Vibrationsschutz sowie die genannten Isoliereigenschaften gewachsen. Dementsprechend werden dickere gummielastische bzw. isolierende Einlagen gebraucht, die ebenso wie dünnere Einlagen im geschlossenen Zustand der Rohrschelle eine bestimmte Spannkraft auf das Rohr ausüben sollen. Wenn eine Rohrschelle z. B. einen Festpunkt für das gehaltene Rohr bilden soll, wird entweder eine so hohe Spannkraft aufgebracht, dass der Reibungskoeffizient des elastomeren Materials mit Bezug auf das Material des zu haltenden Rohrs für die notwendige axiale Haltekraft ausreicht, oder das Rohr wird z. B. mit Muffen zusammengesetzt, die axiale Anschläge für die Festpunkt-Rohrschellen bilden.

Problematisch sind vor allem diejenigen Rohrschellen, in denen das an den Festpunkten fixierte Rohr bei Wärmedehnung und Kontraktion gleiten soll, während jedoch auch an diesen Stellen je nach Situation eine bestimmte Spannkraft angewendet werden muss, um das Rohr genau zu führen und zu halten. Eine verhältnismäßig dünne, gegen das Rohr angepresste Einlage verformt sich bei dessen Wärmedehnung infolge der Haftreibung nur unwesentlich, bevor das Rohr relativ zur Einlage zu gleiten beginnt. Eine gut schalldämmende, dicke Einlage hat jedoch wegen der Haftreibung die Tendenz, bei einer Schiebebewegung des Rohrs umgestülpt zu werden. Dabei staut sich das gummielastische Material der Einlage im Spalt zwischen dem Rohr und dem Rohrschellenbügel, die Anpresskraft gegen das Rohr wird noch größer, und dies kann im Extrem dazu führen, dass eine Gleitbewegung des Rohrs entlang der Innenfläche der Einlage überhaupt nicht mehr möglich ist und diese zerstört wird.

Der Erfindung liegt daher die Aufgabe zugrunde, eine Rohrschelle der eingangs genannten Art zur Verfügung zu stellen, bei der auch eine verhältnismäßig dicke Einlage mit hoher Schalldämmung bzw. Isolierwirkung während einer Relativbewegung des Rohrs ihre Form weitgehend beibehält und selbst bei vergleichsweise großer Spannkraft eine Gleitbewegung des Rohrs zulässt.

Vorstehende Aufgabe wird erfindungsgemäß dadurch gelöst, dass radial innerhalb der Einlage ein mit dieser verbundener Ring aus Metall, Kunststoff oder Sinterwerkstoff mit einer Öffnung vorhanden ist, die sich im wesentlichen an derselben Stelle des Umfangs wie die verschließbare Öffnung im äußeren Ring befindet.

Die vorteilhafte Wirkung der vorgeschlagenen Maßnahme beruht auf dem Zusammenwirken von zwei Ursachen. Da ist zunächst die die Form der Einlage stabilisierende Wirkung des inneren Rings, der aus Metall, Sinterwerkstoff oder hartem, steifen Kunststoff besteht. Als weiterer positiver Faktor kommt hinzu, dass solch ein innerer Ring mit Bezug auf die üblichen Rohrmaterialien einen wesentlich niedrigeren Reibungskoeffizienten hat. Bei gleicher Anpresskraft gleitet daher ein sich bei Erwärmung oder Abkühlung in der Länge änderndes Rohr in der vorgeschlagenen Rohrschelle eher und leichter als in einer bekannten Rohrschelle, bei der die Elastomer-Einlage unmittelbar an dem Rohr anliegt und die verhältnismäßig hohe Haftreibung das Bestreben hat, den radial inneren Bereich der Einlage bei der Bewegung des Rohrs mitzunehmen und dabei die Einlage insgesamt, wie durch Umstülpen zu verformen. Indem der erfindungsgemäß vorgeschlagene innere Ring eine solche Verformung verhindert, lässt sich auch der dabei stattfindende Anstieg der Anpresskraft vermeiden.

Die Formstabilität der Einlage wird gefördert, wenn der vorgeschlagene innere Ring nicht nur die radial innere Umfangsfläche der Einlage bedeckt, sondern auch einen Teil ihrer axialen Endflächen. Eine Abrundung der Übergänge zwischen dem radial inneren Teil und den umgebogenen Rändern des inneren Rings ist dem Gleiten eines Rohrs in der Rohrschelle förderlich, denn es wird einem Verkanten des inneren Rings mitsamt der Einlage auf derjenigen Seite, wo das Rohr in die Rohrschelle hineingleitet, vorgebeugt.

Ein gewünschter niedriger Reibungskoeffizient des inneren Rings mit Bezug auf das Material eines bestimmten Rohrs oder Bauteils wird durch geeignete Auswahl des Materials für den inneren Ring erhalten. Wenn dieser aus einem Sinterwerkstoff besteht, kann er zusätzlich einen Schmierstoff enthalten, der die Reibung am Rohr noch weiter herabsetzt.

Die vorgeschlagene Rohrschelle mit einem festen Innenring bietet im Einzelfall den weiteren Vorteil, dass der formstabile Innenring z. B. derart mit Vorsprüngen oder Ringrillen geformt werden kann, dass er mit einem besonders geformten Bereich eines Rohrs oder einer Rohrmuffe in formschlüssigen Eingriff gebracht werden kann. In diesem Fall ist der vorteilhafte Aspekt nicht eine geringe Reibung einer Gleitschelle sondern die zuverlässig feste, formschlüssige Verbindung an einem Rohrschellen-Festpunkt.

Bei der praktischen Realisierung der Erfindung ist darauf zu achten, dass bei einer gummielastischen Einlage durch deren teilweise Einschließung in den inneren Ring die Elastizität nicht beeinträchtigt wird. Dies ist gewährleistet, wenn die Einlage genügend Freiflächen besitzt, an denen sie sich bei Belastung auswölben und/oder zurückziehen kann. In einer bevorzugten praktischen Ausführungsform liegt deshalb die Einlage an ihren axialen Endflächen zwischen dem inneren und dem äußeren Ring wenigstens teilweise frei. Darüber hinaus ist vorgesehen, dass im entspannten Ausgangszustand zwischen der Einlage und dem inneren und/oder dem äußeren Ring wenigstens ein Hohlraum vorhanden ist. Alternativ kann die Einlage auch mit inneren Hohlräumen geformt sein.

Im übrigen besteht weitgehende Gestaltungsfreiheit bei der Wahl der Einlage und der Ausführung des radial äußeren und des radial inneren festen Rings. Die Einlage ist vorzugsweise ein Abschnitt eines extrudierten Profilstreifens, kann aber auch als Spritzgussteil hergestellt sein. Ihre Dämpfungs- und Isoliereigenschaften lassen sich durch Wahl der Härte des Elstomers bzw. Isolierstoffs, der Dicke und/oder des Querschnitts der Einlage sowie auch durch die Wahl des Querschnitts des äußeren und/oder des inneren festen Rings einstellen. Dabei ist auch die Art der Verbindung der Einlage mit dem äußeren und inneren Ring zu berücksichtigen. Sie kann mit den anliegenden Ringen z. B. durch Verpressen, formschlüssigen Eingriff oder wenigstens teilweisen Umgriff der axialen Endseiten und/oder materialschlüssig, z. B. durch Kleben oder Vulkanisieren, verbunden sein.

Da der radial äußere Ring im praktischen Einsatz stellenweise höher belastet ist als der radial innere Ring, ist er in der Regel breiter oder dicker als der letztere. Er kann auch aus einem höher belastbaren Material bestehen. Bei höherer Tragfähigkeit und entsprechend stärkerem Material, mindestens des radial äußeren Rings, wird man diesen zweckmäßiger Weise diametral gegenüber der verschließbaren Öffnung mit einem Gelenk versehen, das auch aus einer begrenzt beweglichen Schraubenverbindung bestehen kann. Wie bei herkömmlichen Schraubrohrschellen können auch zwei diametral gegenüberliegende, identische Öffnungen mit Schraubverbindungen oder andere herkömmliche Schließ- und/oder Gelenkverbindungen zum Einsatz kommen. In allen diesen Fällen mit zwei Unterbrechungen des ringförmigen Bügels des radial äußeren Rings wird man auch den radial inneren Ring an den entsprechenden Umfangsstellen auftrennen. Die im montierten Zustand ringförmige Einlage braucht nur dort, wo eine verschließbare Ringöffnung vorgesehen ist, durchtrennt zu sein, wenn die Elastizität für den Bewegungsspielraum eines Gelenks im äußeren Ring ausreicht.

Unabhängig davon, wie der radial äußere und innere Ring im axialen Längs- und Querschnitt gestaltet werden, ist dafür Sorge zu tragen, dass sie sich auch im gespannten Zustand der Rohrschelle nicht berühren, um Körperschallübertragung bzw. eine Wärme- oder Kältebrücke oder ggf. einen elektrischen Kurzschluss zwischen den beiden festen Ringen zu vermeiden. Im übrigen bietet der erfindungsgemäß vorgesehene, innere Ring gegenüber einer herkömmlichen Rohrschelle mit einer schalldämmenden und/oder isolierenden Einlage die weiteren Vorteile, dass das elastomere Material geschützt und insbesondere der Abrieb reduziert wird, die von dem radial inneren Ring gebildete Barriereschicht die Weichmacherwanderung in Kunststoffrohre verhindert und Kontaktkorrosion vermieden werden kann. Außerdem lassen sich Formtoleranzen der Einlage und des äußeren Rings durch den formstabilen Innenring ausgleichen.

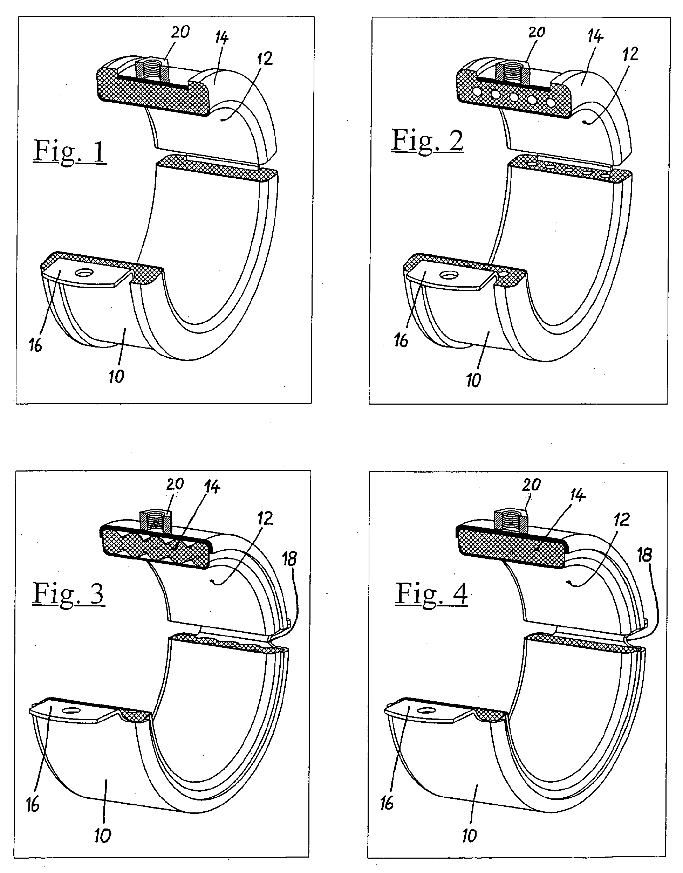

Nachstehend werden anhand der Zeichnung vier Ausführungsbeispiele näher erläutert. Gezeigt sind in Fig. 1 bis Fig. 4 perspektivische Darstellungen unterschiedlicher Rohrschellen, bei denen jeweils aus zeichnerischen Gründen jeweils ein Teil einer Hälfte des Rohrschellenbügels abgeschnitten und weggelassen ist, so dass man jeweils den Querschnitt der Hauptteile der Rohrschellen erkennen kann.

Bei allen gezeigten Ausführungsbeispielen besteht die Rohrschelle aus einem radial äußeren, festen Ring 10, einem radial inneren festen Ring 12 und einer im Vergleich zu den beiden Ringen 10, 12 aus weicherem Material bestehenden Einlage 14. Im Vordergrund jeder Darstellung befindet sich eine verschließbare Öffnung der Rohrschelle, von der wegen des weggeschnitten Teils des Rohrschellenbügels nur ein am äußeren Ring 10 angeformter Flansch 16 mit einem Durchsteckloch für eine Schraube gezeigt ist. Der weggeschnittene Teil des Rohrschellenbügels kann z. B. an der Öffnung ebenfalls mit einem Flansch 16 geformt und mit einem fluchtenden Durchsteckloch oder einer Gewindebohrung für die erwähnte Schraube geformt sein. Selbstverständlich können statt der Schraubverbindung an Flanschen 16 auch sonstige herkömmliche Einhak-, Schnapp- oder Rastverbindungen zum Einsatz kommen.

Bei den Ausführungen nach Fig. 1 und 2 ist auf der dem Flansch 16 diametral gegenüberliegenden Seite des Rohrschellenbügels eine ebensolche Öffnung und Flanschverbindung mittels Schraube vorgesehen. Die Rohrschelle braucht an dieser Stelle bei der Montage nicht unbedingt gelöst zu werden, wenn die Schraubverbindung wie ein begrenzt bewegliches Gelenk funktioniert.

Bei den Ausführungsbeispielen nach Fig. 3 und 4 ist der aus Stahl bestehende äußere Ring 10 an der dem Flansch 16 diametral gegenüberliegenden Umfangsstelle im Querschnitt reduziert und nach einwärts gebogen. Er bildet in dieser Form ein Gelenk 18 welches bei der Montage der Rohrschelle das Aufspreizen und Schließen des Rohrschellenbügels erleichtert. Es gibt eine Vielzahl anderer Arten von Gelenken für Rohrschellen, die ebenfalls verwendet werden könnten.

Die gezeigten Rohrschellen könnten z. B. mittels eines Lochbands und der Schließschraube im Flansch 16 an einer Decke oder sonstigen Tragkonstruktion angehängt werden. Vorgezogen wird jedoch eine in der Mitte einer Bügel-hälfte auf der Außenseite des äußeren Rings 10 angeschweißte Mutter 20, die es gestattet, die Rohrschelle auf einen z. B. in einem Dübel sitzenden oder an einer Tragkonstruktion befestigten Gewindestift aufzuschrauben.

Der radial äußere Ring 10 besteht wie bei herkömmlichen Rohrschellen aus Stahl, auch Edelstahl, oder hartem, festen Kunststoff. Er kann gemäß Fig. 1 und 2 schmaler sein als die Einlage 14 und der innere Ring 12 und in einer ringförmigen Vertiefung der Einlage 14 sitzen. In diesem Fall hat die Einlage 14 beim Festspannen der Rohrschelle sowie bei Vibrationen und Schallschwingungen die Möglichkeit, seitlich und radial nach außen vorzuquellen, so dass sich eine verhältnismäßig weiche Federcharakteristik einer gummielastischen Einlage 14 ergibt. Bei den Ausführungen nach Fig. 3 und 4 ist der äußere Ring zehn etwas breiter als die Einlage 14 und umgreift diese auf ihren Stirnflächen teilweise. Dadurch ergibt sich eine etwas härtere Federcharakteristik der Einlage 14. Zum Ausgleich können gemäß Fig. 3 Ringrillen in der radial äußeren und/oder radial inneren Umfangsfläche der Einlage 14 vorhanden sein. Bei Druckbelastung kann das gummielastische Material der Einlage 14 in diese Hohlräume hinein ausweichen. Alternativ oder zusätzlich kann die Einlage 14 auch gemäß Fig. 2 mit ringförmig umlaufenden inneren Hohlräumen geformt sein, die demselben Zweck dienen.

Der radial innere Ring 12 besteht vorzugsweise ebenfalls aus Stahl, auch Edelstahl, oder einem festen, harten Kunststoff. Um einen bestimmten Reibungskoeffizienten zu erhalten und/oder Korrosion zu vermeiden, kann für den inneren Ring 12 auch ein anderes Metall gewählt werden. Ebenfalls im Hinblick auf die Reibung an dem in der Rohrschelle einzuspannenden Rohrmast oder anderen Bauteil kommt auch ein Schmiermittel enthaltender Sinterwerkstoff in Frage. Wie in Fig. 1 bis 4 gezeigt, ist der ringförmige Bügel des radial inneren Rings 12 sowohl an den Öffnungen als auch an dem Gelenk 18 unterbrochen. Er behindert daher nicht das Aufspreizen und Schließen der Rohrschelle. Sein Innendurchmesser stimmt mit dem Außendurchmesser des aufzunehmenden Rohrs überein, so dass sich über den Umfang eine gleichmäßige Anlage ergibt.

Seiner vorgesehenen Funktion entsprechend, deckt der innere Ring 12 die gesamte innere Umfangsfläche der Einlage 14 ab. Bereits infolge seiner größeren Steifigkeit und geringeren Reibung am Rohr stabilisiert der z. B. durch Kleben fest mit der Einlage 14 verbundene Innenring 12 die Form der Einlage und verhindert, dass sich bei einer relativen Gleitbewegung des Rohrs durch die Reibung die Einlage umzustülpen beginnt, indem sich eine radial innere Ecke axial in die Rohrschelle hineinzieht und dadurch die Druckspannung in der Schelle vergrößert. Die stabilisierende Wirkung des inneren Rings 12 wird weiter dadurch gefördert, dass er an seinen seitliche Randkanten nach außen umgebogen ist und die Einlage 14 seitlich teilweise umgreift. Der Krümmungsradius am Übergang von der inneren Umfangsfläche in die seitlichen Ränder des inneren Rings 14 sorgt dafür, dass sich auch bei leichter Schrägstellung des inneren Rings 12 mit Bezug auf das Rohr keine innere Randkante der Rohrschelle in das Material des Rohrs eindrücken oder einschneiden kann. Wenn gemäß Fig. 3 und 4 sowohl der radial äußere Ring 10 als auch der innere Ring 12 die Einlage 14 seitlich umgreift, wird einerseits ihre Form optimal stabil gehalten, andererseits muss darauf geachtet werden, dass sich die beiden festen Ringe 10, 12 nicht berühren und dass das Material der Einlage 14 noch genügend freiliegende Oberflächen hat, um sich bei Druckspannungen vorwölben zu können.

Bei der Auswahl des Materials der Einlage 14 braucht im Gegensatz zu herkömmlichen Schellen keine Rücksicht auf Reibeigenschaften, Abriebfestigkeit und Weichmacher genommen zu werden, da der innere Ring 12 die Einlage 14 von dem Rohr trennt. Das Material der Einlage 14 kann somit im Hinblick auf seine hauptsächliche Funktion, sei es die Schall- oder Vibrationsdämpfungseigenschaft, Wärmedämmung oder elektrische Isolierung, optimiert werden. Dies gilt auch im Hinblick auf die Dicke der Einlage 14. Wegen der stabilisierenden Wirkung des inneren Rings 12 kann eine wesentlich dickere Einlage 14 als bisher verwendet und damit eine wesentlich stärkere Schalldämmung bzw. thermische oder elektrische Isolierung realisiert werden als bisher, ohne befürchten zu müssen, dass die Einlage bei Relativbewegungen des eingespannten Rohrs in kurzer Zeit zerstört wird. In Fällen, wo es auf Schall- und Vibrationsdämpfung ankommt, wird man elastomeres Material für die Einlage 14 verwenden, wenn ein Rohr thermisch isoliert werden soll, vorzugsweise einen geschäumten Kunststoff und bei einer elektrischen Isolierung ein Material, das sich auch bisher schon zur Isolierung von elektrischen Leitern und Verbindungen bewährt hat.

Abweichend von den dargestellten Ausführungsbeispielen können auch der äußere Ring sind und/oder der innere Ring 12 profiliert sein. Außerdem kann der innere Ring 12 auf seinem Umfang mehr als nur zwei Unterbrechungen aufweisen.

## Patentansprüche

1. Rohrschelle mit einem Ring (10) aus Metall oder Kunststoff mit wenigstens einer verschließbaren Öffnung und einer in diesem befestigten Einlage (14) aus einem schalldämmenden und/oder wärmedämmenden und/oder elektrisch isolierenden Material, **dadurch gekennzeichnet, dass** radial innerhalb der Einlage (14) ein mit dieser verbundener Ring (12) aus Metall, Kunststoff und Sinterwerkstoff mit einer Öffnung vorhanden ist, die sich im wesentlichen an derselben Stelle des Umfangs wie die verschließbare Öffnung im äußeren Ring (10) befindet.

2. Rohrschelle nach Anspruch 1, **dadurch gekennzeichnet, dass** die Einlage (14) aus einem Elastomer besteht.

3. Rohrschelle nach Anspruch 1 oder 2, **dadurch gekennzeichnet, dass** die Einlage (14) an ihren axialen Endflächen zwischen dem inneren und äußeren Ring (10, 12) wenigstens teilweise freiliegt.

4. Rohrschelle nach einem der Ansprüche 1 bis 3, **dadurch gekennzeichnet, dass** im entspannten Ausgangszustand zwischen der Einlage (14) und dem inneren und/oder dem äußeren Ring (10, 12) wenigstens ein Hohlraum vorhanden ist.

5. Rohrschelle nach Anspruch 1, **dadurch gekennzeichnet, dass** die Einlage (14) im entspannten Ausgangszustand wenigstens einen inneren Hohlraum aufweist.

6. Rohrschelle nach einem der Ansprüche 1 bis 5, **dadurch gekennzeichnet, dass** die Einlage (14) ein Form- oder Spritzgussteil oder ein Abschnitt eines extrudierten Profilstreifens ist.

7. Rohrschelle nach einem der vorhergehenden Ansprüche, **dadurch gekennzeichnet, dass** die Dämpfungseigenschaften der Einlage (14) durch Wahl der Härte des Elastomers, der Dicke und/oder des Querschnitts der Einlage und/oder des äußeren und/oder des inneren Rings (10, 12) eingestellt sind.

8. Rohrschelle nach einem der vorhergehenden Ansprüche, **dadurch gekennzeichnet, dass** die Einlage (14) mit dem äußeren und/oder dem inneren Ring durch Verpressen, formschlüssigen Eingriff oder wenigstens teilweisen Umgriff der axialen Endseiten oder materialschlüssig, z. B. durch Kleben oder Vulkanisieren, verbunden ist.

9. Rohrschelle nach einem der vorhergehenden Ansprüche, **dadurch gekennzeichnet, dass** der äußere Ring (10) breiter oder dicker ist als der innere Ring (12) und/oder aus einem höher belastbaren Material als der innere Ring (12) besteht.

10. Rohrschelle nach einem der vorhergehenden Ansprüche, **dadurch gekennzeichnet, dass** ihre Teile (10, 12, 14) derart dimensioniert sind, dass sich der äußere und der innere Ring (10, 12) auch in dem um ein Rohr gespannten Zustand nicht berühren.

11. Rohrschelle nach einem der vorhergehenden Ansprüche, **dadurch gekennzeichnet, dass** ihre Gleiteigenschaften mit Bezug auf das Material eines zu haltenden Rohrs durch Wahl des Materials oder eine Beschichtung des inneren Rings (12) eingestellt sind.

12. Rohrschelle nach einem der vorhergehenden Ansprüche, **dadurch gekennzeichnet, dass** der äußere Ring (10) diametral gegenüber der verschließbaren Öffnung mit einem Gelenk (18) und der innere Ring (12) mit einer weiteren Öffnung versehen ist.

13. Rohrschelle nach einem der vorhergehenden Ansprüche, **dadurch gekennzeichnet, dass** der äußere Ring (10) mit Befestigungsgliedern (20) zur Fixierung an einem Tragteil versehen ist.
